# EUROPÄISCHE PATENTSCHRIFT

(11) **EP 1 473 222 B1**
(45) Veröffentlichungstag und Bekanntmachung des Hinweises auf die Patenterteilung: **01.08.2007**
(21) Anmeldenummer: 04010207.1
(22) Anmeldetag: 29.04.2004
(51) Int. Cl.: B64C 1/20, B64D 9/00

(54) **Frachtdeck für ein Flugzeug**
Cargo deck for aircraft
Plate-forme à cargaison pour avions

(30) Priorität: 30.04.2003 DE 10319503
(43) Veröffentlichungstag der Anmeldung: 03.11.2004
(73) Patentinhaber: Telair International GmbH, 83714 Miesbach (DE)
(72) Erfinder: Huber, Thomas, 83727 Schliersee (DE); Holzner, Richard, 83026 Rosenheim (DE)
(74) Vertreter: Bohnenberger, Johannes

(56) Entgegenhaltungen:
- EP-A- 0 464 981
- DE-A- 19 724 941
- US-A- 2 625 118
- US-A- 6 125 984
- US-B2- 6 517 028

## Beschreibung

Die Erfindung betrifft ein Frachtdeck nach dem Oberbegriff des Patentanspruches 1.

Ein derartiges Frachtdeck ist beispielsweise aus der DE AS 21 62 042, der EP-A-0 464 981 oder der US 3,693,919 bekannt. Das Frachtdeck umfasst Floorbeams oder eine derartige Tragekonstruktion, auf der Floorpanels oder Bodenabschnitte, Kugelmatten, Rollenbahnen, Riegel, Rollenantriebseinheiten oder dergleichen Transporteinrichtungen zum Fördern und Fixieren von Paletten, Containern oder dergleichen Gegenständen vorgesehen sind. Derartige Frachtdecks weisen also gleichzeitig die Beförderungseinrichtungen und die zum Befestigen des Gutes notwendigen Verriegelungseinrichtungen und somit ein vollständiges Transportsystem auf, das ständig mitfliegt.

Beim Beladen wird Regenwasser, Schnee oder Eis mit den Frachtstücken in den Laderaum mit eingetragen. Um dieses Wasser abzuführen, werden die Kugelmatten, die Rollenbahnen oder auch die Rollenantriebseinheiten mit Entwässerungseinrichtungen versehen, wie sie beispielsweise aus der DE 197 24 941 C2 bekannt sind. Beim Auswechseln der Transporteinrichtungen, z. B. einer Kugelmatte aufgrund defekter Systeme oder auch zum Umbau des Frachtdecks, um bestimmte Gegenstände besser verstauen zu können, ist ein erheblicher Aufwand notwendig, wenn die Entwässerungseinrichtungen ebenfalls mit umgebaut werden müssen.

Darüber hinaus muss der Frachtladeraum ein in sich im Wesentlichen dicht abgeschlossenes System darstellen, um beim Ausbruch eines Brandes den Brand mit Halon ersticken zu können. Das Gas darf also nicht frei in den Bilgen-Raum abfließen, was wiederum erhebliche Abdichtarbeiten beim Auswechseln von Transporteinrichtungen oder beim Umbau des Frachtdecks mit sich bringt.

Der Erfindung liegt die Aufgabe zugrunde, ein Frachtdeck der eingangs genannten Art dahingehend weiterzubilden, dass das Einbauen und Auswechseln von Transporteinrichtungen erleichtert wird.

Diese Aufgabe wird durch den gegenstand des Anspruchs 1 gelöst.

Ein wesentlicher Punkt der Erfindung liegt somit darin, dass zunächst eine Trennung von Frachtraum und Bilgen-Raum in hydraulischer Hinsicht vorgenommen wird, wobei diese Trennung im Hinblick auf die mechanische Stabilität sehr leichtbauend ausgelegt sein kann. Es muss ja eben nur eine hydraulische Trennung vorgenommen werden, die darüber hinaus fast keinen Differenzdruck aufzunehmen hat.

Die Dichteinrichtungen sind als Auffangwannen ausgebildet, zum Auffangen von Wasser oder dergleichen Flüssigkeiten aus dem Frachtraum. Es werden somit also "zwei Fliegen mit einer Klappe geschlagen", da einerseits eine Halon-dichte Abdichtung geschaffen wird, andererseits diese Abdichtung gleichzeitig zum Auffangen von Wasser oder auch aus den Transportbehältern auslaufenden Flüssigkeiten ausgebildet ist.

Die Auffangwannen weisen vorzugsweise Abläufe auf, welche mit einem Rohrleitungssystem zum Ableiten der Flüssigkeiten verbunden sind. Auf diese Weise ist es möglich, die ablaufenden Flüssigkeiten zusammenzufassen und in einem einzigen Sammelbehälter oder Ablauf zu konzentrieren. Über Pumpeinrichtungen kann dann eine Entleerung stattfinden. Bei einer bevorzugten Ausführungsform wird als Pumpeinrichtung das im Flugzeug vorhandene Vakuumtoilettensystem verwendet, so dass gesammelte Flüssigkeit - entweder auf Anforderung oder in regelmäßigen Abständen - in die dort vorgesehenen Abwassertanks gesaugt und am Boden (mit dem Toilettenwasser) entleert werden kann.

Die Auffangwannen sind vorzugsweise an den Floorbeams und/oder den Rollenbahnen befestigt. Da die Floorbeams mit den Rollenbahnen ein gleichmäßiges Raster bilden, kann mit wenigen verschiedenen Formen bzw. Größen gearbeitet werden, was die Herstellung der Auffangwannen sowie deren Einbau erheblich erleichtert.

Besonders einfach wird der Einbau dann, wenn die Auffangwannen an den Floorbeams und/oder den Rollenbahnen durch Kleben, z. B. mit doppelt klebendem Klebeband befestigt sind. Diese Befestigungsart ist bei einer entsprechenden Formgebung der Auffangwannen derart, dass deren Gewicht durch Formschluss aufgefangen wird, durchaus ausreichend und besonders einfach sowie kostengünstig.

Die Rollenbahnen können mit gesonderten Abläufen ausgestattet sein. Es ist jedoch bevorzugt, die Rollenbahnen mit Entwässerungsbohrungen, insbesondere in deren Seitenwangen derart auszustatten, dass die Entwässerungsbohrungen in die angrenzenden Auffangwannen münden. Somit stellen die Rollenbahnen selbst "Auffangwannen" dar, welche aber nicht mit gesonderten Abläufen ausgestattet werden müssen.

Vorzugsweise sind die Abläufe mit Filtereinrichtungen ausgestattet, so dass das Rohrleitungssystem nicht verstopft werden kann. Die Filtereinrichtungen können leicht von oben durch Absaugen gereinigt werden, wenn die darüber liegenden Transporteinrichtungen, insbesondere die Kugelmatten und Kugelstreifen, abgehoben werden.

Die Kugelmatten oder auch andere flächig abdeckende Bauelemente wie z. B. Floorpanels werden vorzugsweise mit Entwässerungsöffnungen an ihren Ober- und Unterseiten versehen. Dann, wenn gesonderte Entwässerungseinrichtungen vorgesehen sind, genügt es, die Kugelmatten an ihren Unterseiten mit Entwässerungsöffnungen (oder im Wesentlichen ganz offen) auszubilden, so dass durch die Kugelelemente bzw. die Aufnahmebohrungen für die Kugelelemente eindringendes Wasser frei nach unten in die Auffangwannen ablaufen kann.

Die Rollenantriebseinheiten werden vorzugsweise in entsprechenden Einbauöffnungen und Wannen in den Kugelmatten vorgesehen, wie dies beispielsweise aus der DE 197 12 278 A1 bekannt ist. Diese Kugelmatten (und ggf. auch die Kugelstreifen) werden vorzugsweise mittels Schnellverschlüssen befestigt und zwar insbesondere an den Rollenbahnen.

Bevorzugte Ausführungsformen der Erfindung ergeben sich aus den Unteransprüchen und der nachfolgenden Beschreibung eines Ausführungsbeispiels, das an Hand von Abbildungen näher erläutert wird. Hierbei zeigen
- Fig. 1 eine perspektivische Schemadarstellung eines teilmontierten Frachtdecks von oben,
- Fig. 2 eine vergrößerte Darstellung des Bereiches II aus Fig. 1,
- Fig. 3 eine perspektivische Darstellung eines Teilbereichs des Frachtdecks von unten und
- Fig. 4 eine vergrößerte Darstellung des Bereiches IV aus Fig. 3.

In der nachfolgenden Beschreibung werden für gleiche und gleich wirkende Teile die selben Bezugsziffern verwendet.

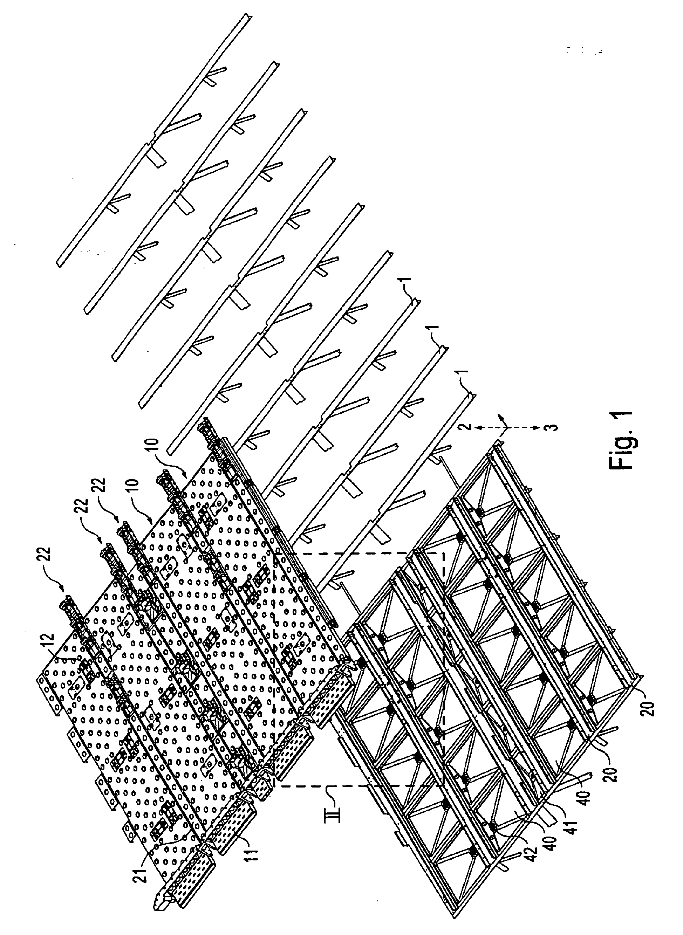

Wie aus Fig. 1 hervorgeht, ist ein Frachtdeck der hier gezeigten Art aus Floorbeams 1 als Unterkonstruktionen aufgebaut, auf welchen in Längsrichtung des Frachtraums verlaufend Rollenbahnen 20 angeordnet sind. In die sich so ergebenden fast quadratischen Öffnungen sind (große) Wannen 40 bzw. in die mehr länglichen Öffnungen (kleine) Wannen 41 eingesetzt, welche mit ihren Randbereichen auf den Floorbeams 1 bzw. den nach außen ragenden Abschnitten der Rollenbahnen 20 mittels doppelt klebender Streifen festgeklebt sind. In die Rollenbahnen 20 werden Kugelstreifen 21 oder Riegel 22 eingebaut. Zwischen den Rollenbahnen 20 werden Kugelmatten 10 montiert, welche Aufnahmeöffnungen zum Einsetzen von Rollenantriebseinheiten 12 oder weiteren Riegeln aufweisen.

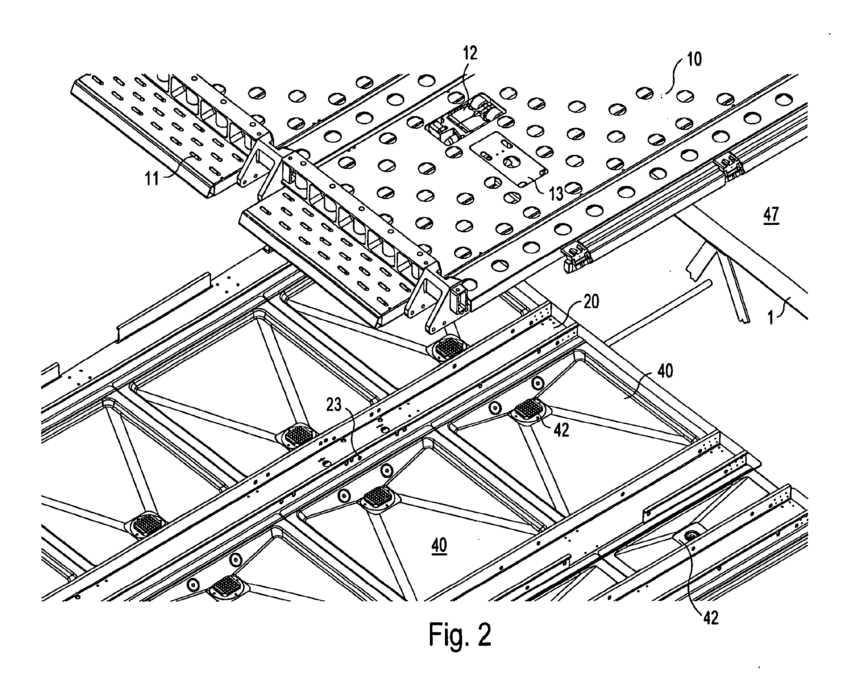

Die Wannen 40, 41 weisen, wie dies insbesondere in Fig. 2 gezeigt ist, Abläufe 42 auf, die mit Filtereinrichtungen (hier als Gitter dargestellt) versehen sind. Die Wannen 40, 41 sind derart geformt, dass die Abläufe 42 jeweils am tiefsten Punkt jeder Wanne 40, 41 liegen. An höher gelegenen Orten sind z. B. durch Gummistopfen verschließbare Durchlassöffnungen 47 für Steuer- und Stromversorgungskabel, z. B. für Rollenantriebseinheiten vorgesehen, so dass eine einfache Versorgung der Rollenantriebseinheiten 12 oder auch von Sensorelementen mit elektrischen Leitungen ermöglicht wird.

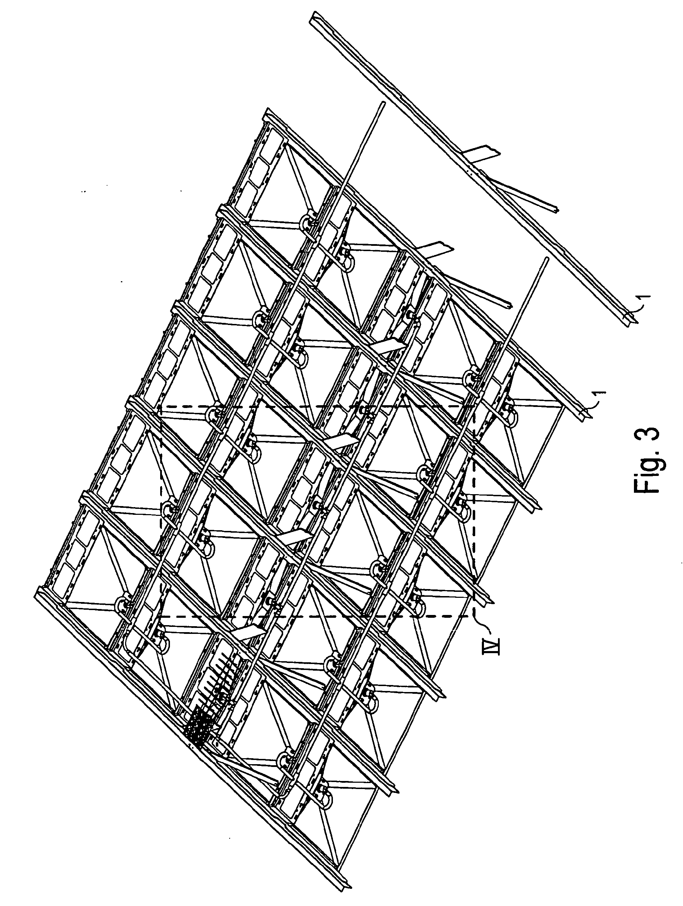

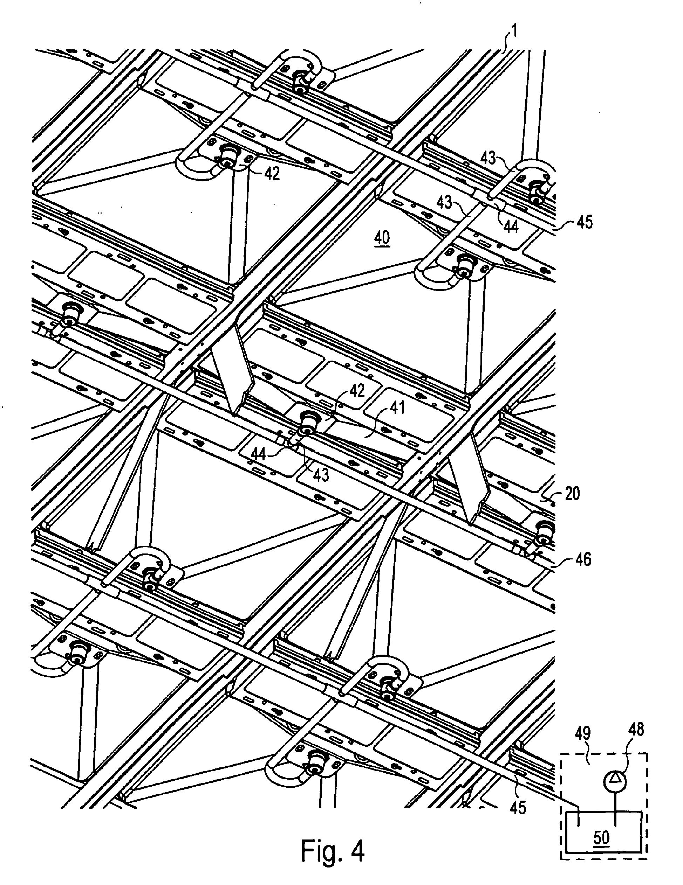

Von unten betrachtet ergibt sich das in den Fig. 3 und 4 gezeigte Bild, aus dem hervorgeht, dass die Abläufe 42 der Wannen 40, 41 über Anschlussleitungen 43 und Koppelstücke 44 mit Sammelleitungen 45, 46 verbunden sind, über welche anfallendes Wasser zu Sammelbehältern oder ins Freie geleitet werden kann. Bei einer entsprechend passgenauen Ausbildung der Wannen 40, 41 und bei entsprechendem dichten Verbinden mit den Floorbeams 1 und den Rollenbahnen 20 ergibt sich somit eine Abdichtung des Raums 2 gegenüber dem Bilgen-Raum 3 (siehe Fig. 1) mit einer Restundichtigkeit, welche durch den Querschnitt der Sammelleitungen 45, 46 bestimmt ist. Werden diese auf eine einzige Sammelleitung geführt, so entspricht somit die Undichtigkeit dem Querschnitt dieser einzigen Sammelleitung, welche darüber hinaus einfach durch ein Ventil (hier nicht gezeigt) absperrbar ist, um eine absolut dichte Trennung zwischen dem Laderaum 2 und dem Bilgen-Raum 3 zu bewerkstelligen. Bei der hier gezeigten Ausführungsform (s. Fig. 4) sind die Leitungen 45, 46 an ein im Flugzeug vorhandenes Vakuumtoilettensystem 49 mit Pumpe 48 angeschlossen, so dass Flüssigkeit (bedarfsweise oder in regelmäßigen Abständen) in dessen Sammelbehälter 50 abgesaugt und nach dem Flug am Boden entleert werden kann.

Die Rollenbahnen 20 sind über Entwässerungsöffnungen 23, welche in Wannen 40 münden, entwässert. Die Kugelmatten 10 weisen darüber hinaus Entwässerungsöffnungen 11 auf und sind an ihrer Unterseite ebenfalls offen (auch im Bereich der Rollenantriebseinheiten 12 bzw. der dazu gehörigen Einbauöffnungen 13), so dass auf dem (dichten) System aus Floorbeams 1, Rollenbahnen 20 und Wannen 40, 41 ein Flüssigkeits-durchlässiger Boden liegt, so dass im Betrieb keine Pfützen auftreten können.

Beim Auswechseln von Kugelmatten 10 oder Kugelstreifen 21 muss darum in keinem Moment auf Dichtigkeit geachtet werden, was Montage und Demontage ganz erheblich erleichtert. Vorzugsweise sind die Kugelmatten 10 und die Kugelstreifen 21 über (nicht gezeichnete) Schnellverschlüsse insbesondere an den Rollenbahnen 20 leicht montierbar und demontierbar befestigt.

### Bezugszeichenliste

- 1: Floorbeam
- 2: Frachtraum
- 3: Bilgen-Raum
- 10: Kugelmatte
- 11: Entwässerungsöffnung
- 12: Rollenantriebseinheit
- 13: Einbauöffnung
- 20: Rollenbahn
- 21: Kugelstreifen
- 22: Riegel
- 23: Entwässerungsöffnung
- 40: Wanne (groß)
- 41: Wanne (klein)
- 42: Ablauf
- 43: Anschlussleitung
- 44: Koppelstück
- 45: Sammelleitung
- 46: Sammelleitung
- 47: Durchlassöffnung
- 48: Pumpe
- 49: Vakuumtoilettensystem
- 50: Sammelbehälter

## Patentansprüche

1. Frachtdeck für ein Flugzeug, umfassend
Tragekonstruktionen, insbesondere Floorbeams (1) und darauf befestigte Transporteinrichtung zum Befördern und Fixieren von Paletten, Containern oder dergleichen Gegenständen auf dem Frachtdeck, nämlich Floorpanels, Kugelmatten (10), Rollenbahnen (20), Riegel (22) und mit einem Frachtraum (2) oberhalb des Frachtdecks und einem Bilgen-Raum (3) unterhalb des Frachtdecks,
**dadurch gekennzeichnet, dass**
Abdichteinrichtungen (40, 41) zum Abdichten des Frachtraums (2) vom Bilgen-Raum (3) vorgesehen und als Auffangwannen (40, 41) ausgebildet sind, zum Auffangen von Flüssigkeit, insbesondere von Wasser aus dem Frachtraum (2).

2. Frachtdeck nach Anspruch 1,
**dadurch gekennzeichnet, dass**
die Auffangwannen (40, 41) Abläufe (42) aufweisen, welche mit einem Rohrleitungssystem (43 - 46) zum Ableiten der Flüssigkeit verbunden sind.

3. Frachtdeck nach einem der vorhergehenden Ansprüche,
**dadurch gekennzeichnet, dass**
die Auffangwannen (40, 41) an Floorbeams (1) und/oder an den Rollenbahnen (20) befestigt sind.

4. Frachtdeck nach einem der vorhergehenden Ansprüche,
**dadurch gekennzeichnet, dass**
die Rollenbahnen (20) Entwässerungsbohrungen (23) aufweisen, welche in die Auffangwannen (40, 41) münden.

5. Frachtdeck nach Anspruch 2,
**dadurch gekennzeichnet, dass**
die Abläufe (42) Filtereinrichtungen umfassen.

6. Frachtdeck nach einem der vorhergehenden Ansprüche,
**dadurch gekennzeichnet, dass**
die Kugelmatten (10) Entwässerungsöffnungen (11) an ihren Unter- und/oder Oberseiten aufweisen.

7. Frachtdeck nach Anspruch 2,
**dadurch gekennzeichnet, dass**
die Abläufe (42) mit mindestens einer Pumpe (48) oder dergleichen Unterdruckeinrichtung zum gesteuerten Absaugen der Flüssigkeit verbunden sind.

8. Frachtdeck nach Anspruch 7,
**dadurch gekennzeichnet, dass**
die Unterdruckeinrichtung (48) ein im Flugzeug vorhandenes Vakuumtoilettensystem (49) umfasst.

## Claims

1. Cargo deck for an aircraft comprising
supporting structures, in particular floor beams (1) and transport facilities for conveying and fixing pallets, containers or similar objects on the cargo deck, namely floor panels, ball mats (10), roller tracks (20), latches (22), and with a cargo hold (2) above the cargo deck and a bilge area (3) below the cargo deck,
**characterised in that**
sealing devices (40, 41) are provided to seal off the cargo hold (2) from the bilge area (3) and are constructed as collecting troughs (40, 41) to collect liquid, in particular water, from the cargo hold (2).

2. Cargo deck according to Claim 1,
**characterised in that**
the collecting troughs (40, 41) comprise drains (42) that are connected to a system of pipes (43-46) to carry away the liquid.

3. Cargo deck according to one of the previous claims,
**characterised in that**
the collecting troughs (40, 41) are attached to floor beams (1) and/or to the roller tracks (20).

4. Cargo deck according to one of the previous claims,
**characterised in that**
the roller tracks (20) comprise drainage openings (23) that open into the collecting troughs (40, 41).

5. Cargo deck according to Claim 2,
**characterised in that**
the drains (42) comprise filter devices.

6. Cargo deck according to one of the previous claims,
**characterised in that**
the ball mats (10) comprise drainage openings (11) on their lower and/or upper surfaces.

7. Cargo deck according to Claim 2,
**characterised in that**
the drains (42) are connected to at least one pump (48) or similar low-pressure device for the controlled drawing off of the liquid.

8. Cargo deck according to Claim 7,
**characterised in that**
the low-pressure device (48) comprises a vacuum toilet system (49) present in the aircraft.

## Revendications

1. Plateforme de chargement pour un avion, comprenant :
des constructions porteuses, en particulier des poutres de sol (1) et un dispositif de transport fixé par-dessus pour transporter et fixer des palettes, des conteneurs ou similaires sur la plateforme de chargement, à savoir des panneaux de sol, des tapis à billes (10), des convoyeurs à rouleaux (20), des loquets (22) et comportant une soute (2) au-dessus de la plateforme de chargement et un fond de cale (3) en dessous de la plateforme de chargement,
**caractérisé en ce que**
des dispositifs d'étanchéité (40, 41) sont prévus pour étancher la soute (2) vis-à-vis du fond de cale (3) et se présentent sous la forme de cuvettes collectrices (40, 41) pour recueillir du liquide, en particulier l'eau provenant de la soute (2).

2. Plateforme de chargement selon la revendication 1,
**caractérisé en ce que**
les cuvettes collectrices (40, 41) présentent des évacuations (42), qui sont raccordées à un système de conduites tubulaires (43 - 46) pour l'évacuation de liquide.

3. Plateforme de chargement selon l'une quelconque des revendications précédentes,
**caractérisé en ce que**
les cuvettes collectrices (40, 41) sont fixées sur des poutres de sol (1) et/ou sur les convoyeurs à rouleaux (20).

4. Plateforme de chargement selon l'une quelconque des revendications précédentes,
**caractérisé en ce que**
les convoyeurs à rouleaux (20) présentent des orifices de drainage (23), qui débouchent dans les cuvettes collectrices (40, 41).

5. Plateforme de chargement selon la revendication 2,
**caractérisé en ce que**
les évacuations (42) comprennent des dispositifs de filtrage.

6. Plateforme de chargement selon l'une quelconque des revendications précédentes,
**caractérisé en ce que**
les tapis à billes (10) présentent des orifices de drainage (11) sur leurs faces inférieures et/ou supérieures.

7. Plateforme de chargement selon la revendication 2,
**caractérisé en ce que**
les évacuations (42) sont raccordées à au moins une pompe (48) ou à un dispositif à dépression similaire pour l'aspiration commandée du liquide.

8. Plateforme de chargement selon la revendication 7,
**caractérisé en ce que**
le dispositif à dépression (48) comprend un système de toilettes sous vide (49) présent dans l'avion.
